# EUROPÄISCHE PATENTANMELDUNG

(11) **EP 0 607 788 A2**
(43) Veröffentlichungstag der Anmeldung: **27.07.1994**
(21) Anmeldenummer: 94100039.0
(22) Anmeldetag: 04.01.1994
(51) Int. Cl.: E04F 15/14

(54) **Dehnungsfugenstreifen**

(30) Priorität: 16.01.1993 DE 9300524 U
(71) Anmelder: POLYTHERM VERTRIEBSGESELLSCHAFT HAUSTECHNISCHER ARTIKEL mbH, D-48607 Ochtrup (DE)
(72) Erfinder: Frieling, Werner, Dipl.-Ing., D-48431 Rheine (DE)
(74) Vertreter: Hoffmeister, Helmut, Dr. Dipl.-Phys.

(57) **Zusammenfassung**

Damit sich ein Dehnungsfugenstreifen einfach verlegen läßt und nach dem Verlegen sicher in der Fuge hält und für den Betrachter und Benutzer eine übergangslose und abdichtende Überbrückung zwischen den begrenzenden Bauelementen herstellt, sind Teilseitenflächen (7.1, 8.1) von Seitenflächen (7, 8) in einem über einem Basisbereich (16) liegenden Dehnungsfugenbereich (15) im wesentlichen parallel zueinander angeordnet. Weitere Teilflächen (7.2, 8.2) der Seitenflächen (7, 8) sind im wesentlichen konkav oder gerade ausgebildet und gehen in eine gegenüber einer glatten Oberfläche (9.1', ... 9.n') ausgebildeten breiteren Basisfläche (6) über. Im Dehnungsfugenbereich (15) sind Abrißkanten (18.1, ... 18.n) eingebracht, an denen Abschlußstreifen (9.1, 9.n) so abziehbar sind, daß die glatte Oberfläche (9.1', ... 9.n') in einer geforderten Höhe angeordnet ist. Damit der Dehnungsfugenstreifen an einem Untergrund festlegbar ist, sind am Basisbereich (16) Halterungselemente (10.1, ... 10.n) angeordnet.

## Beschreibung

Die Erfindung betrifft einen Dehnungsfugenstreifen gemäß dem Oberbegriff des Anspruchs 1.

Es ist bekannt, insbesondere beheizbare Fußbodenkonstruktionen so aufzubauen, daß auf einer glatten Fläche Dämmfelder mit Rohrhalterungen bzw. Halterungsnoppen verlegt werden. Ausgehend vom Wärmebedarf werden Heizungsrohre in entsprechender Dichte verlegt, die in einem fest berechneten Abstand zueinander in den Rohrhalterungen bzw. Halterungsnoppen gehalten werden. Darüberwird eine Schicht aus Beton, Natursteinplatten, Fliesen oder dergleichen aufgebracht. Zur Aufnahme auftretender Dehnungskräfte und zum äußeren Abschluß werden in die Fugen Fugenspaltenteile eingelegt.

Nach den veröffentlichten Richtlinien ist das Aussparen von Fugen vorgeschrieben. Der durch die Fuge gebildete Zwischenraum ist durch eine Masse zu schließen, welche sich elastisch an die Fugeninnenwand anzulegen hat. Eine starre Fugenmasse darf nicht verwendet werden, da aufgrund des Temperaturwechsels mit variierenden Längenausdehnungen der Bauelemente zu rechnen ist. Die "Elastische Fugenmasse" der Bewegungsfuge hat dabei die Aufgabe, eine für den Betrachter und Benutzer übergangslose Überbrückung zwischen den unterschiedlichen Bauelementen herzustellen. Die Fugenmasse muß eine Fuge nicht nur räumlich ausfüllen, sondern auch abdichtend innerhalb der Fuge wirken und darüber hinaus die zwischen den Bauelementen auftretende Wärmeausdehnung aufehmen und die Übertragung von Klopfschall verringern. Weiterhin sollen derartige Fugen ansprechend aussehen und vor allen Dingen auch i m Laufe der Zeit ihre äußere Form nicht verlieren.

Aus der US 28 49 935 ist ein Dehnungsfugenstreifen bekannt, der aus einer glatten Oberfläche und einer gegenüber der Oberfläche breiteren Basisfläche besteht. Von der breiteren Basisfläche erhebt sich ein Basisteil, das von angewinkelten Teilflächen zu beiden Seiten begrenzt ist und in eine teilweise runde Konfiguration mit einer runden Ausnehmung übergeht. Aus dem teilweise runden Teil des Basisteils erhebt sich dann ein Dehnungsfugenteil, das durch nach innen abgewinkelte Teilwände begrenzt wird.

Nachteilig ist, daß durch den trapezförmig ausgebildeten Dehnungsfugenteil die Seitenkanten der oberen Fußbodenschicht angeschrägt sein müssen. Kommen Platten mit geraden Seitenkanten zum Einsatz, muß das Dehnungsfugenteil sostarkverpreßtwerden, daß es aus der Fuge heraus tritt. Werden dagegen unbearbeitete Platten in herkömmlicher Weise verlegt, bilden sich an der glatten Oberfläche Spalte aus, so daß für den Betrachter bzw. Benutzer keine übergangslose Überbrückung entsteht und der Dehnungsfugenstreifen darüber hinaus seine abdichtende Wirkung verliert. Nachteilig ist darüber hinaus, daß der Dehnungsfugenstreifen eine unveränderliche Höhe aufweist. Dadurch ist er nur für einen bestimmten Fußboden- oder Wandaufbau geeignet.

Aus dem DE-GM 18 97 599 ist weiterhin ein Dehnungsfugenband bekannt. Es weist eine glatte Oberfläche auf, die auf einem trapezförmig ausgebildeten Oberteil liegt. An das trapezförmige Oberteil sind L-förmig gestaltete Seitenschenkel angeformt. Beim Verlegen werden die unteren L-Schenkel auf den Fußboden gelegt. Dadurch, daß sich zwischen den mit dem Oberteil verbundenen, nach oben stehenden L-Schenkeln ein Hohlraum befindet, wird das Dehnungsfugenband so verpreßt, daß sich durch das trapezförmige Oberteil eine Fuge unterschiedlicher Breite ausbildet. Werden Platten mit geraden Seitenflächen eingesetzt, kommt es dadurch entweder zu einer Verformung des Dehnungsfugenbandes mit einer gerundeten Oberfläche oder zu einer unvollkommenen Abdichtung zwischen den einzelnen Platten.

In der Europäischen Patentschrift 86 100 978 wird ein Fugenspaltenteil beschrieben, das im wesentlichen aus zwei Teilen, nämlich einem Stopfteil und einem Lippenteil besteht. Das Stopfteil, das in die Fuge, die aus zwei senkrecht zueinander bestehenden Bauelementen gebildet wird, eingeschoben ist, steht in Kontakt mit der Innenwand der Fuge. Das Lippenteil, der vor der Fuge verbleibt, liegt mit seinen äußeren Bereichen den die Fugen bildenden Bauelementen direkt an und ist mit dem hinteren Teil des Stopfteiles verbunden. Das Stopfteil weist auf seiner zu der Fugeninnenwand gerichteten Oberfläche widerhakenförmige Leisten auf, deren Endbereiche die Fugeninnenwand berühren. Durch die Verwendung derartiger Leisten erhält das Fugenspaltenteil eine hohe Klemmwirkung, wodurch das hochelastische Lippenteil sowohl dem horizontal als auch dem vertikal verluafenden Bodenelement abdichtend anliegt. Zwar führen elastische Rückstellkräfte dazu, daß durch den Spannungsaufbau des Stoffteils die abdichtenden Teile an die Oberfläche der entsprechenden Bauelemente gedrückt werden, jedoch kann sich das so ausgebildete Fugenspaltenteil aus der Fuge herauslösen.

Der Erfindung liegt die Aufgabe zugrunde, die vorstehend genannten Nachteile bei einem Dehnungsfugenstreifen zu beseitigen und einen Dehnungsfugenstreifenstreifen zu schaffen, der sich einfach verlegen läßt und nach dem Verlegen sicher in der Fuge hält und für den Betrachter und Benutzer eine übergangslose und abdichtende Überbrückung zwischen den unterschiedlichen Bauelementen herstellt.

Erfindungsgemäß wird die Aufgabe dadurch gelöst,
- daß weitere Teilseitenflächen der Seitenflächen in einem über den Basisbereich liegenden Dehnungsfugenbereich im wesentlichen parallel zueinander angeordnet sind,
- daß im Dehnungsfugenbereich Abrißkanten angebracht sind,
- daß an den Abrißkanten als äußerer Abschluß Abschlußstreifen so abziehbar sind, daß die glatte Oberfläche in einer geforderten Höhe angeordnet ist und
- daß am Basisbereich Halterungselemente angeordnet sind.

Durch den so ausgebildeten Dehnungsfugenstreifen entsteht ein kompakter länglicher Körper, der in beliebiger Länge gefertigt und in unterschiedlichen Längen durch ein entsprechendes Zuschneiden und unterschiedlichen Höhen durch ein Abziehen von Abschlußstreifen an den Abrißkanten verlegt werden kann. Die jeweils glatte Oberfläche bildet dabei das einheitliche obere Abschlußelement des Dehnungsfugenstreifens mit der Oberfläche der darüber verlegten äußeren Schicht. Die im Basisbereich angeordneten Halterungselemente sorgen dafür, daß der Dehnungsfugenstreifen selbststehend und ohne Zusatz auf dem Untergrund stehen kann. Der Dehnungsfugenstreifen stellt damit eine vorverlegbare ausgefüllte Fuge dar, was insbesondere bei Natursteinplatten, Fliesen oder dergleichen von besonderem Vorteil ist.

Vorteilhaft ist es, wenn die sich parallel gegenüberliegenden weiteren Teilseitenflächen bis auf ein im wesentlichen streifenförmig ausgebildeten Basisbereich herunterführen, so daß eine umgekehrt T-ähniiche Konfiguration entsteht. Ein so ausgebildeter Dehnungsfugenstreifen ist insbesondere bei Fußböden geringer Höhe einsetzbar. Der breiter und flach ausgebildete Basisbereich sorgt für ein glattes und festes Anliegen am jeweiligen Untergrund. Der darüberliegende schmale Dehnungsfugenbereich bildet eine sehr gleichmäßige und formschöne Fuge aus.

Vorteilhaft ist es, wenn von der Basis in die Seitenwände übergehende Vorstanzungen ganz oder teilweise eingebracht sind, durch die Ausnehmungen im Abstand derz. B. in einem Dämmfeld gehaltenen Heizungsrohre herauslösbar sind. Die Ausnehmungen können dabei entweder rund oder eckig ausgebildet sein. Hierdurch ist es gewährleistet, daß der Dehnungsfugenstreifen mit seiner Basis immer glatt auf der Oberfläche des Dämmfeldes aufliegt, wobei zugleich die Rohre zusätzlich gehalten werden. Sind Vorstanzungen nur teilweise eingebracht, sind zum Herauslösen der Ausnehmsungen die bestehenden durchgehenden Materialverbindungen mit einem Hilfsmittel, z. B. einem Messer zu durchtrennen. Die durchgehenden Materialverbindungen haben dabei den Vorteil, daß die Ausnehmung beim Verlegen nicht aus dem Streifen herausfällt und sich leichter beim Einbringen der Vorstanzungen fertigen läßt.

Vorteilhaft ist es, wenn als Halterungselemente an der Basisfläche angeordnete Haken und/oder eine daran befindliche mit einem Selbstklebeband abdeckbare Klebefläche als Halterungselemente ausgebildet sind. Hierdurch ist es möglich, den Dehnungsfugenstreifen einfach zu verlegen, indem er entweder auf den Untergrund gedrückt oder mit ihm verklebt wird.

Vorteilhaft ist es, wenn an wenigstens einer der Seitenflächen eine abziehbare Folienbahn angeordnet ist. Die Folienbahnen sind dabei in Höhe der Basisfläche mit den gleichen Flächen fest verbunden, während der darüber liegende Teil nur leicht angeklebt ist. Werden die Folienbahnen abgezogen, und auf den Untergrund, z. B. ein Dämmfeld gelegt, entsteht hierdurch eine zusätzliche Festlegungdes Dehnungsstreifens an diesem. Die dann aufzubringenden Schichten halten den Dehnungsfugenstreifen an dem Untergrund fest.

Vorteilhaft ist es, wenn der durch Basisfläche, Außenfläche und Teilflächen und Seitenflächenteile der Seitenwände gebildete Körper aus geschäumten Kunststoff (Schaumkunststoff), vorzugsweise aus geschäumtem Weich-Polyvinylchlorid, Polyethylen oder Kautschuk besteht. Hierdurch wird insbesondere gewährleistet, daß der Dehnungsfugenstreifen zum einen in der Fuge gehalten und zum anderen zerstörungsfrei alle auf ihn wirkenden Kräfte aufnehmen kann.

Die Erfindung wird nachstehend an einem Ausführungsbeispiel näher erläutert. Es zeigen:
Figur 1a bis 1c ein auf einem Dämmungsfeld verlegten Dehnungsfugenstreifen,
Figur 2a einen Dehnungsfugenstreifen mit an der Basis angeordneten Haken und
Figur 2b einen Dehnungsfugenstreifen mit auf die Basis aufgebrachte durch ein Selbstklebeband abgedeckte Klebefläche.

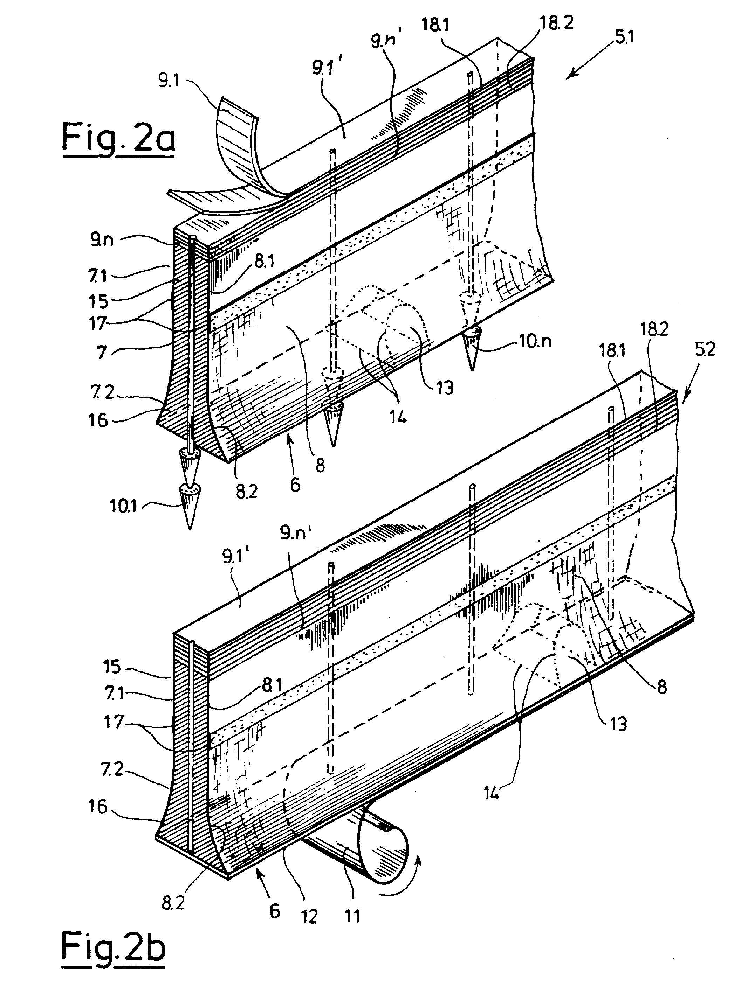

Ein in den Figuren 2a und 2b dargestellter Dehnungsfugenstreifen 5.1 und 5.2 besteht aus einer glatten durchgehenden breiten Basisfläche 6, über der sich eine glatte Oberfläche 9.1', ... 9.n' erstreckt. Die Basisfläche 6 und die Oberfläche 9.1', ... 9.n' werden durch Seitenflächen 7, 8 verbunden. Hierdurch entsteht ein im wesentlichen prismatisch ausgebildeter Dehnungsfugenstreifen 5.1 und 5.2. Die Seitenflächen 7 und 8 sind in Teilseitenflächen 7.1 und 8.1 und Seitenflächenteile 7.2 und 8.2 unterteilt. In einem Dehnungsfugenbereich 15 liegen sich die Teilseitenflächen 7.1 und 8.1 parallel gegenüber. In einem Basisbereich 16 haben die Seitenflächenteile 7.2 und 8.2 eine konkave Gestalt. Selbstverständlich ist auch möglich, daß die Seitenflächenteile 7.2 und 8.2 gerade ausgebildet sind. Möglich ist es auch, die sich parallel gegenüberliegenden Teilseitenflächen 7.1 und 8.1 bis auf die Basisfläche 6 herunterzuführen, wobei der Basisbereich 16 dann streifenförmig ausgebildet ist, so daß eine umgekehrt T-ähnliche Konfiguration entsteht. Um sich den unterschiedlichsten Höhen anpassen zu können, sind im Dehnungsfugenbereich 15Abrißkanten 18.1, ... 18.n angeordnet, die ein Abziehen von Abschlußstreifen 9.1, ... 9.n ermöglichen.

An der Basis sind, wie insbesondere Figur 2a zeigt, Haken 10.1, ... 10.n angeformt. Selbstverständlich ist auch möglich, diese Haken durch den gesamten Dehnungsfugenstreifen 5.1 durchzutreiben, so daß er wie dargestellt nach unten herausragt. Diese Haken 10.1, ... 10.n werden dazu benutzt, den Dehnungsfugenstreifen 5.1 zu befestigen.

Eine andere Form der Befestigung ist dadurch gegeben, daß auf der Unterseite der Basis 6 eine durchgehende oder auch unterbrochene Klebefläche 12 aufgebracht wird. Der Dehnungsfugenstreifen 5.1 bzw. 5.2 kann mit Vorstanzungen 14 versehen sein. Diese Vorstanzungen 14 sind in definierten Abständen anbringbar. Sie können ganz oder teilweise eingebracht sein. Durch sie ist es möglich, Ausnehmungen 13 in den Dehnungsfugenstreifen 5.1, 5.2 einzubringen. Die Ausnehmungen 13 haben dabei entweder eine runde, dem Rohr angepaßte Form. Sie können aber auch rechtwinklig ausgebildet sein.

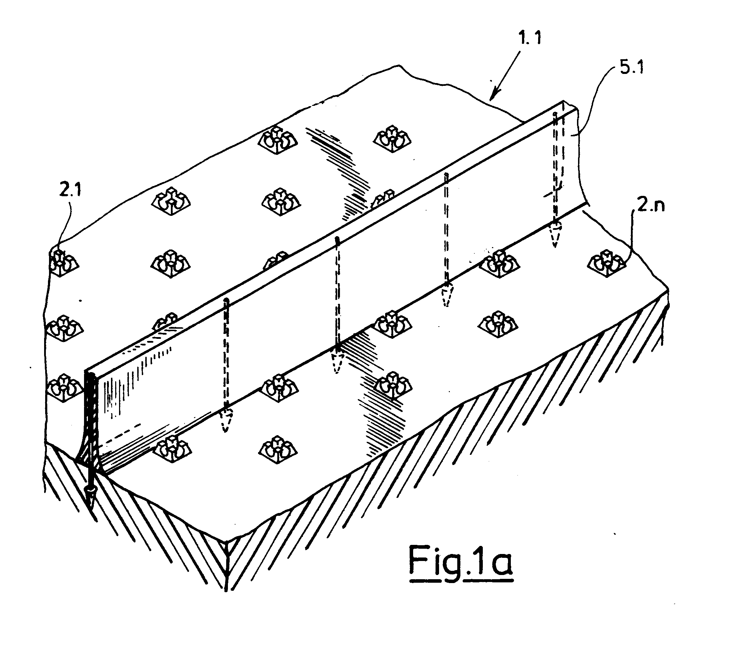

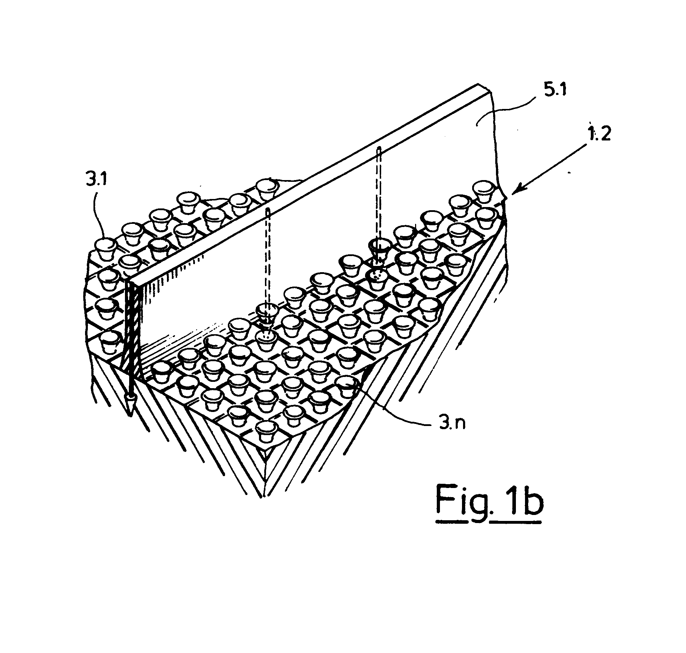

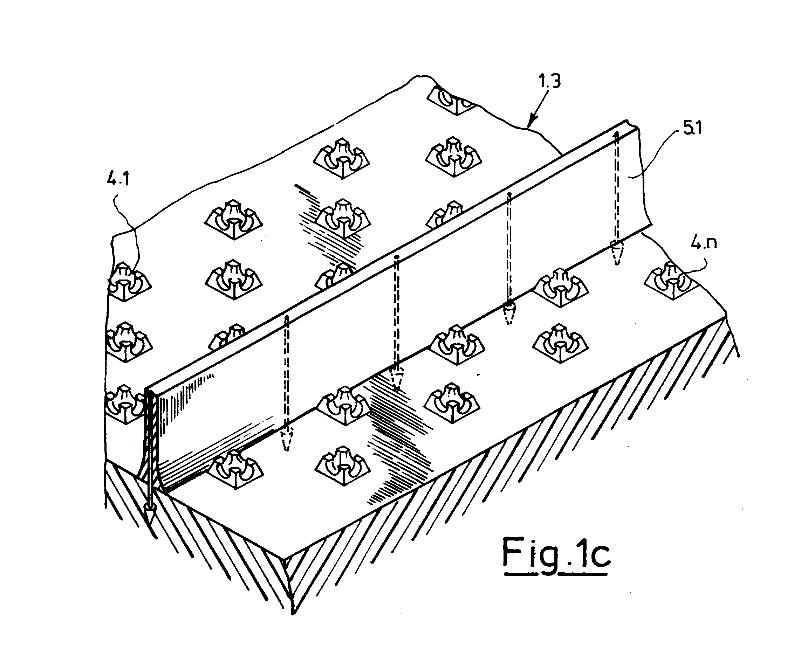

Verwendet werden die Dehnungsfugenstreifen 5.1,5.2 insbesondere für heizbare Fußboden- oder Wandkonstruktionen. Auf einer glatten Oberfläche, z. B. einer Betondecke, werden, wie die Figuren 1abis 1c zeigen, Dämmfelder 1.1, 1.2 oder 1.3 aufgelegt. Auf diese Dämmfelder werden entsprechend dem berechneten Raumwärmebedarf Heizungsrohre in einem bestimmten Abstand zueinander verlegt. Sie werden dabei im Dämmfeld 1.1 gemäß Figur 1a von Rohrhalterungen 2.1, ... 2.n, von Rohrhalterungsnoppen 3.1, ... 3.n gemäß Figur 1 b odervon Rohrhalterungen 4.1, ... 4.n gehalten. Auf das Dämmfeld 1.1, 1.2 oder 1.3 mit den darin verlegten Rohren wird eine Schicht aus Beton, Natursteinplatten, Fliesen oder dergleichen verlegt. Durch die auftretenden Temperaturschwankungen, bedingt durch Beheizung und Abkühlung, dehnt sich die oben verlegte Schicht aus oder zieht sich zusammen. Dadurch entstehen Kräfte, die zu einem Aufbrechen der gesamten oberen Schicht führen können. Deshalb ist es notwendig, in bestimmten Abständen Fugen auszusparen. Erfindungswesentlich ist dabei, daß nicht zuerst die Fuge ausgebildet wird, sondern daß auf das Dämmfeld 1.1, 1.2 oder 1.3 Dehnungsfugenstreifen 5.1 bzw. 5.2 im geforderten Fugenabstand befestigt werden.

Das Befestigen auf dem Dämmfeld 1.1, 1.2 oder 1.3 kann dadurch geschehen, daß die Haken 10.1, ... 10.n in das weiche Dämmfeld eingedrückt werden. Die Haken können dabei entweder an der Basisfläche 6 bereits angeformt sein oder durch den gesamten Dehnungsfugenstreifen ähnlich einem Nagel hindurchgeschlagen werden. Eine andere Befestigungsmöglichkeit besteht darin, daß das Selbstklebeband 11 von der Klebefläche 12 abgezogen wird und so der Dehnungsfugenstreifen mit dem Dämmfeld 1.1, 1.2 oder 1.3 verklebt wird. Auf dieser so vorbereiteten Unterlage wird die darüberzulegende Schicht gebracht. Die Breite des Dehnungsfugenstreifens 5.1 bzw. 5.2 bildet dabei zugleich die Breite der geforderten Fuge. Um sich den unterschiedlichsten Schichtdicken anpassen zu können, werden im Dehnungsfugenbereich 15 an den Abrißkanten 15.1, ... 15.n Abschlußstreifen 9.1, ... so abgezogen, daß in den gewünschten Höhen glatte Oberflächen 9.1' ... 9.n' realisierbar sind.

Durch diese Form der Veränderung einer beheizbaren Fußbodenkonstruktion entsteht insbesondere der Vorteil, daß der Dehnungsfugenstreifen 5.1 bzw. 5.2 nach dem Aufbringen der oberen Schicht aus Beton, Natursteinplatten, Fliesen oder dergleichen zugleich eine auch sonst vorzunehmende Verlegungsfuge ist. Die so ausgebildete Fuge, die durch den Dehnungsfugenstreifen 5.1 bzw. 5.2 ausgefüllt ist, ist darüber hinaus durch ihre elastisches Material in der Lage, die auftretenden Verschiebekräfte aufzunehmen. Vor allem ist gesichert, daß der Dehnungsfugenstreifen 5.1, 5.2 im gewünschten Abstand und der gewünschten Breite eingebracht wird, an dieser Stelle verbleibt und auch bei hohen auftretenden Ausdehnungskräften nicht aus der Fuge herausgedrückt werden kann. Wird der Dehnungsfugenstreifen 5.1 bzw. 5.2 auf einer glatten Fläche verlegt, können Folienbahnen 17 vorgesehen sein, die in Höhe der Basisfläche 6 an den Seitenflächen 7, 8 z. B. durch Schweißen festgelegt sind und durch ein Haftmittel an dem übrigen Teil der Seitenflächen 7 und 8 festgehalten werden. Diese Folienbahnen 17 werden von beiden Seitenflächen 7 und 8 abgezogen und auf die Dämmfelder 1.1, 1.2 bzw. 1.3 gelegt.

Um den besonderen Einsatzbedingungen gewachsen zu sein, ist der Dehnungsfugenstreifen 5.1, 5.2 insbesondere aus Schaumkunststoff hergestellt. Selbstverständlich läßt er sich auch aus anderen elastischen, vor allem starke Dehnungskräfte aufnehmenden Stoffe, wie z. B. Hartgummi fertigen.

## Patentansprüche

1. Dehnungsfugenstreifen mit
- einem eine glatte Oberfläche (9.1', ... 9.n') bildenden äußeren Abschluß,
- einer gegenüber der glatten Oberfläche (9.1', ... 9.n') breiter ausgebildeten Basisfläche (6),
- Seitenflächen (7, 8, die die glatte Oberfläche (9.1', ... 9.n') und die Basisfläche (6) miteinander verbinden und
- einem Basisbereich (16), der durch im wesentlichen konkav oder gerade ausgebildete in die Basisfläche (6) übergehende Teilseitenflächen (7.2, 8.2) der Seitenflächen (7, 8) begrenzt ist,
dadurch gekennzeichnet,
- daß weitere Teilseitenflächen (7.1, 8.1) der Seitenflächen (7, 8) in einem über den Basisbereich (16) liegenden Dehnungsfugenbereich (15) im wesentlichen parallel zueinander angeordnet sind,
- daß im Dehnungsfugenbereich (15) Abrißkanten (18.1, ... 18.n) angebracht sind,
- daß an den Abrißkanten (18.1, ... 18.n) als äußerer Abschluß Abschlußstreifen (9.1', ... 9.n') so abziehbar sind, daß die glatte Oberfläche 9.1', ... 9.n') in einer geforderten Höhe angeordnet ist und
- daß am Basisbereich (16) Halterungselemente (10.1, ... 10.n; 11, 12) angeordnet sind.

2. Dehnungsfugenstreifen nach Anspruch 1, dadurch gekennzeichnet, daß die sich parallel gegenüberliegenden weiteren Teilseitenflächen (7.1,8.1) bis auf ein im wesentlichen streifenförmig ausgebildeten Basisbereich (16) herunterführen, so daß eine umgekehrt T-ähnliche Konfiguration entsteht.

3. Dehnungsfugenstreifen nach Anspruch 1, dadurch gekennzeichnet, daß von der Basisfläche (6) aus bis in die Seitenflächen (7, 8) hineingehend Vorstanzungen (14) in definierten Abständen ganz oder teilweise so eingebracht sind, daß Ausnehmungen (13) zum Überbrücken von z. B. auf einem Dämmfeld (1.1, 1.2, 1.3) verlegten Heizungsrohren, Leitungen oder dergleichen herauslösbar sind.

4. Dehnungsfugenstreifen nach einem der Ansprüche 1 bis 3, dadurch gekennzeichnet, daß an der Basisfläche (6) angeordnete Haken (10.1, ... 10.n) und/oder eine daran befindliche mit Selbstklebeband (11) abdeckbare Klebefläche (12) als Halterungselemente ausgebildet sind.

5. Dehnungsfugenstreifen nach einem der Ansprüche 1 bis 4, dadurch gekennzeichnet, daß an wenigstens einer der Seitenflächen (7, 8) eine abziehbare Folienbahn (17) angeordnet ist.

6. Dehnungsfugenstreifen nach einem der Ansprüche 1 bis 5, dadurch gekennzeichnet, daß der durch Basisfläche, Oberfläche und Teilseitenflächen und Seitenflächen der Seitenwände (6, 9.1', ... 9.n', 7.1, 7.2, 8.1, 8.2, 7, 8) gebildete Körper mit seinen Abschlußstreifen (9.1', ... 9.n') aus geschäumtem Kunststoff (Schaumkunststoff), vorzugsweise aus geschäumten Weich-Polyvinylchlorid, Polyethylen oder Kautschuk besteht.
